# EUROPÄISCHE PATENTSCHRIFT

(11) **EP 0 919 732 B1**
(45) Veröffentlichungstag und Bekanntmachung des Hinweises auf die Patenterteilung: **05.03.2003**
(21) Anmeldenummer: 98121485.1
(22) Anmeldetag: 12.11.1998
(51) Int. Cl.: F16B 12/20

(54) **Verbindungsbeschlag**
Connecting fitting
Ferrure d'assemblage

(30) Priorität: 27.11.1997 DE 29721068 U
(43) Veröffentlichungstag der Anmeldung: 02.06.1999
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 507 289
- DE-U- 29 510 504

## Beschreibung

Die Erfindung betrifft einen Verbindungsbeschlag zum lösbaren Verbinden zweier Teile, vorzugsweise zweier Möbelteile, bestehend aus einem in eine Aussparung des ersten Teils einsetzbaren topfförmigen Gehäuse, in dem ein Bolzen mit einem das erste Teil überragenden Zapfen drehbar gelagert ist, der in eine Bohrung des anderen Teils einführbar und in dieser durch Drehung verriegelbar ist, und aus einem mit dem Bolzen verbunden radialen Betätigungshebel, der einen Durchbruch des Gehäuses durchsetzt.

Bei einem aus DE 44 37 273 C2 bekannten Verbindungsbeschlag dieser Art ist nach einer ersten Ausführungsform der radiale Betätigungshebel fest mit dem Bolzen verbunden, so daß er auch im verriegelten Zustand das Gehäuse überragt und unschön und störend in Erscheinung tritt. Würde der Betätigungshebel kürzer ausgebildet, um ihn im verriegelten Zustand im Gehäuse versenken zu können, wäre er von Hand nur mit großen Schwierigkeiten zu betätigen.

Nach einer zweiten Ausführungsform des bekannten Verbindungsbeschlags ist vorgesehen, daß der Bolzen im Bereich des Gehäusedurchbruchs mit einem verzahnten Abschnitt und der Betätigungshebel mit einem den Bolzen einfassenden Ring mit entsprechender Innenverzahnung versehen ist, derart, daß durch axiales Verschieben des Betätigungshebels in der Aussparung dieser in Eingriff und außer Eingriff mit dem verzahnten Abschnitt des Bolzens gebracht werden kann. Diese Ausgestaltung ermöglicht zwar ein weitgehendes Versenken des Betätigungshebels im verriegelten Zustand des Bolzens in dem Gehäusedurchbruch. Es ist jedoch relativ kompliziert, den Betätigungshebel durch axiales Verschieben in kuppelnden Eingriff mit dem Bolzen zu bringen und diesen wieder von dem Bolzen zu lösen, wobei aufgrund der axialen Verschieblichkeit der Betätigungshebel im verriegelten Zustand auch den Durchbruch nicht vollständig verdecken kann.

Aufgabe der Erfindung ist es, einen in einfacher Weise nur von Hand montierbaren Verbindungsbeschlag der eingangs angegebenen Art zu schaffen, bei dem der Betätigungshebel im montierten Zustand des Verbindungsbeschlages nicht das Gehäuse überragt und der Verbindungsbeschlag im montierten Zustand ein geschlossenes und gefälliges Aussehen bietet.

Erfindungsgemäß wird diese Aufgabe durch einen Verbindungsbeschlag mit den Merkmalen des Patentanspruchs 1 gelöst.

Bei dem erfindungsgemäßen Verbindungsbeschlag läßt sich der von Hand betätigbare Betätigungshebel einfach dadurch mit dem Bolzen kuppeln, daß er in eine eingeschobene Stellung gedrückt wird. Nach Drehung des Bolzens durch den Betätigungshebel in die verriegelte Stellung kann dieser ausgezogen, dadurch die kuppelnde Verbindung mit dem Bolzen gelöst und dieser in eine Stellung geschwenkt werden, in der er in dem Gehäuse versenkt gehalten ist.

Zweckmäßigerweise greift der Betätigungshebel in der eingeschobenen Stellung mit einem Fortsatz in eine radiale oder seitliche Öffnung oder Vertiefung des Bolzens.

Nach einer bevorzugten Ausführungsform ist vorgesehen, daß der Bolzen mit einem radialen Lagerbock mit seitlichen, zu dem Bolzen parallelen Zapfen versehen ist, auf die gabelartig und U-förmig gekrümmte Schenkel einer Seite des Betätigungshebels einhakbar sind, und daß der Betätigungshebel mit einem die Schenkel überragenden Fortsatz in die Vertiefung greift. Bei dieser Ausführungsform ist der Betätigungshebel dadurch mit dem Bolzen gekuppelt, daß er mit seinem vorderen zapfenförmigen Ende in die Vertiefung greift und durch die U-förmig gekrümmten Schenkel mit einem im Abstand von den Zapfen liegenden Bereich an dem Bolzen gehalten ist, so daß der Hebel über eine 2-Punkt-Abstützung an dem Bolzen angreift und eine gute Kupplung gewährleistet ist. Wird der Hebel aus seiner Kupplungsstellung herausgezogen, bilden die Zapfen des Lagerbocks gleichsam Schwenkachsen für den Betätigungshebel, um die dieser in seine in dem Gehäuse versenkte Stellung geschwenkt werden kann.

Zweckmäßigerweise besteht der Betätigungshebel aus einem im wesentlichen rechteckigen Blechzuschnitt, von dessen einer schmalen Seite diese seitlich überragende Schenkel derart U-förmig zurückgebogen sind, daß diese von einem zwischen diesen befindlichen Steg im gebogenen Zustand überragt werden. Der überragende Steg bildet den in die Aussparung des Bolzens eingreifenden Zapfen.

Zweckmäßigerweise entspricht der Gehäusedurchbruch der Form des Betätigungshebels, so daß der Betätigungshebel im ausgezogenen Zustand in der Weise um die Zapfen des Lagerbocks schwenkbar ist, daß er den Durchbruch abdeckt.

Der Betätigungshebel kann derart in den Durchbruch eindrückbar sein, daß seine Außenseite mit der ebenen Außenseite des Gehäuses fluchtet.

Zweckmäßigerweise ist der Bolzen mit einem radialen Vorsprung versehen, der einen Anschlag für ein gehäusefestes Widerlager bildet und die Drehung des Bolzens begrenzt.

Zur Verriegelung des den Bolzen verlängernden Zapfens in einer Bohrung des anderen Teils kann der Zapfen beispielsweise mit einem Gewinde versehen sein. Zweckmäßigerweise ist der Zapfen jedoch in der aus DE 44 37 273 C2 bekannten Weise exzentrisch mit der Stirnseite des Bolzens verbunden, wobei auf dem exzentrischen Schaftteil ein mit einem schneidenen Steg versehene Scheibe als Verriegelungsstück befestigt ist. Die Scheibe kann zusätzlich mit mindestens einem schneidenen Gewindegang versehen sein. Weiterhin kann das Gehäuse mit einem zapfenartigen Fortsatz der aus der DE 44 37 273 C2 bekannten Art versehen sein, der mit einer exzentrischen Bohrung versehen ist, in der der Bolzen gelagert ist.

Ein Auführungsbeispiel der Erfindung wird nachstehend anhand der Zeichnung näher erläutert. In dieser zeigt
- Fig. 1a bis Fig. 1c: eine perspektivische Ansicht des Verbindungsbeschlages mit unterschiedlichen Drehstellungen des Bolzens und unterschiedlichen Stellungen des Betätigungshebels,
- Fig. 2a bis Fig. 2d: Querschnitte durch den Verbindungsbeschlag längs der Linie II-II in Fig. 1a in den aus Fig. 1 ersichtlichen Stellungen und
- Fig. 3: den Verbindungsbeschlag nach den Fig. 1 und 2 in perspektivischer und auseinandergezogener Stellung seiner Einzelteile.

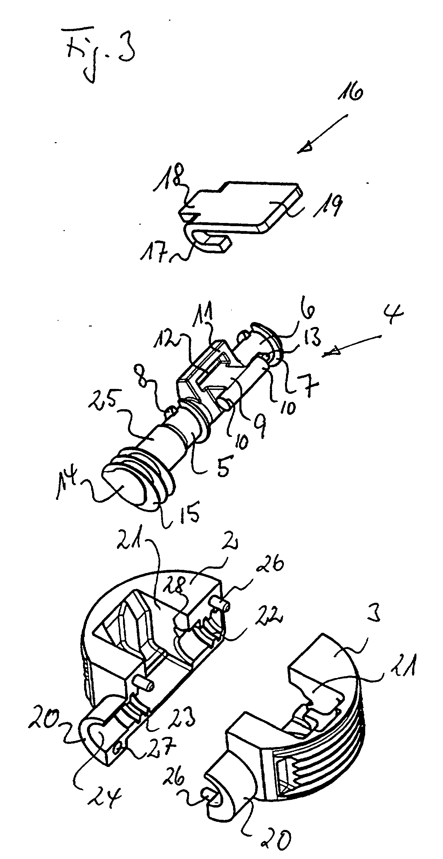

Der Verbindungsbeschlag besteht aus einem aus den Gehäuseteilen 2, 3 zusammengesetzten Gehäuse 1, in dem der am besten aus Fig. 3 ersichtliche Bolzen 4 gelagert ist. Der Bolzen 4 besteht aus einem langgestreckten Schaft 5 mit verschiedenen Abschnitten. Ein endseitiger Abschnitt 6 ist mit einem Gewindegang 7 versehen. Ein gleichartiger und gleichgerichteter Gewindegang 8 ist etwa im mittleren Bereich des Schafts 5 vorgesehen. Zwischen den Gewindegängen 6, 8 trägt der Schaft 5 einen radialen im Querschnitt etwa dreieckigen Lagerbock 9, der an seinem oberen Ende mit diesen seitlich, also in axialer Richtung des Bolzens 5, überragenden Achszapfen 10 versehen ist. Neben dem Lagerbock 9 weist der Schaft 5 eine weitere Verbreiterung 11 auf, die im Anschluß an den Lagerbock 9 mit einer rechteckigen Vertiefung 12 versehen ist. Die aus Fig. 3 ersichtliche Flanke des Lagerbocks 9 läuft bündig in die innere Seitenwand der Vertiefung 12 ein.

Zwischen dem Gewindegang 7 und dem Lagerbock 9 trägt der Schaft 5 einen radialen Vorsprung 13, der einen Anschlag bildet.

Das vordere Ende des Schafts wird durch einen Zapfen 14 gebildet, auf den exzentrisch ein schneidendes Gewinde 15 aufgesetzt ist.

Auf die seitlichen Zapfen 10 des Lagerbocks 9 ist ein Betätigungshebel 16 durch seitliche U-förmig gebogene Haken 17 aufhakbar. Der Betätigungshebel 16 ist aus einem im wesentlichen rechteckigen Blechzuschnitt gebogen, wobei zunächst die Haken bildenden Schenkel 17 einen zwischen diesen befindlichen rechteckigen und durch seitliche Schnitte freigeschnittenen zapfenartigen Vorsprung 18 einfassen. Die Haken 17 sind durch Zurückbiegen der Schenkel gebildet, wobei die frei auslaufenden Enden der Schenkel parallel zu dem Hauptteil 19 des Betätigungshebels 16 verlaufen. Der rechteckige zapfenförmige Fortsatz 18 entspricht in seiner Form der Vertiefung 12, so daß dieser Fortsatz nach dem Aufhaken des Betätigungshebels auf die Zapfen 10 des Lagerbocks 9 in die Vertiefung 12 eingeschoben werden kann. Die frei auslaufenden Schenkel der U-förmigen Haken sind so lang, daß diese von den Zapfen 10 nicht abgleiten, wenn der zapfenartige Vorsprung 18 des Betätigungshebels 19 voll in die Vertiefung 12 eingeschoben ist. Im eingeschobenen Zustand ist der Betätigungshebel 9 somit drehfest mit dem Schaft 5 des Bolzens verbunden, so daß dieser über den Betätigungshebel 19 gedreht werden kann, wobei sich dieser sowohl in der Vertiefung 12 als auch über die Schenkel der Haken 17 an den seitlichen Zapfen 10 des Lagerbocks 9 abstützt.

Wird der Betätigungshebel 19 aus der Vertiefung 12 herausgezogen, wird die Auszugsbewegung dadurch begrenzt, daß die Zapfen 10 in die durch die Krümmung der Haken 17 gebildeten Bogen greifen, so daß sich der Betätigungshebel 19 nach seiner Endkupplung von dem Bolzen 4 um die Zapfen 10 verschwenken läßt.

Der Bolzen 4 wird zweckmäßigerweise als Druckgußteil, beispielsweise aus Zamag, hergestellt.

Das Gehäuse 1 besteht aus den beiden Teilen 2, 3, die als Spritzgußteile aus Kunststoff hergestellt sind.

Das Gehäuse 1 weist eine topfförmige Form auf und ist mit einem Fortsatz 20 versehen. Das Gehäuse weist eine mittlere Aussparung 21 auf, in der der Lagerbock 9 und der Fortsatz 11 mit der Aussparung 12 liegen. In seinen vorderen und hinteren Endbereichen ist das Gehäuse 9 mit Abschnitten 22, 23 versehen, die komplementär zu dem Schaft 5 mit den Gewindegängen 6, 8 ausgebildet sind. Der vordere zapfenförmige Fortsatz 20 des Gehäuses ist mit einer exzentrischen Bohrung 24 versehen, in der der zylindrische Abschnitt 25 des Bolzens 4 gelagert ist. Die Gehäusehälften 2, 3 sind in ihrer mittleren Teilungsebene mit Zapfen 26 und komplementären Bohrungen 27 versehen, die bei dem Zusammenfügen der Gehäuseteile der Zentrierung und Halterung dienen.

Weiterhin ist das Gehäuse seitlich der mittleren Aussparung oder des mittleren Durchbruchs 21 mit einer Ausnehmung 28 versehen, deren eine Flanke ein Widerlager für den Anschlag 13 bildet, der die Drehung des Bolzens durch den Betätigungshebel 16 begrenzt.

Zur Montage des Verbindungsbeschlags wird der Betätigungshebel 19 mit seinen hakenförmigen Teilen 17 auf die Zapfen 10 des Lagerbocks 9 aufgehakt, bevor der Bolzen 4 in die konturengerecht ausgebildeten Aussparungen einer Gehäusehälfte eingelegt und die andere Gehäusehälfte zum Schließen des Gehäuses aufgedrückt wird. Dadurch ist der Betätigungshebel in dem Gehäuse festgelegt, da die Zapfen 10 ein Herausziehen verhindern und ein Aushaken dadurch unmöglich ist, daß der Betätigungshebel gegen Gehäuseteile anstößt, bevor die Schenkel der hakenförmigen Teile 17 von den Zapfen 10 abgleiten können.

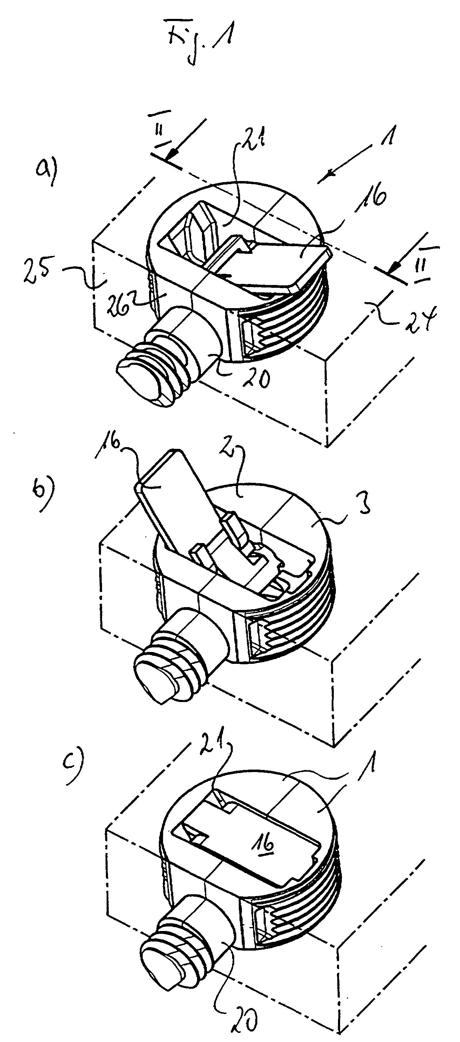

Zu seiner Montage wird das topfförmige Gehäuse 1 in üblicher Weise in eine sacklochartige Bohrung einer Platte oder eines Möbelteils 24 eingesetzt. Dabei wird die Sacklochbohrung so eingebracht, daß sie eine vordere Stirnkante 25 der Platte 24 anschneidet, wobei der angeschnittene Teil der Bohrung durch die Stirnfläche 26 des topfförmigen Gehäuses geschlossen ist. Das Gehäuse überragt mit seinem zapfenförmigen Fortsatz 20 die Stirnseite 25 des Möbelteils. Die Bohrung des durch den Verbindungsbeschlag zu verbindenden anderen Teils entspricht in ihrem Durchmesser dem zapfenartigen Fortsatz 20 des Gehäuses 1. Zum Zusammenfügen wird dann über den Betätigungshebel 16 der Bolzen 4 in eine aus Fig. 1 ersichtliche Stellung gedreht, in der der exzentrische Gewindeabschnitt 15 aufgrund der sich kompensierenden Exzentrizitäten der Bohrung 24 und der exzentrischen Anordnung des Gewindes 15 auf dem Schaft 5 in der Weise aufheben, daß das Gewinde 15 mit dem zapfenartigen Fortsatz 20 fluchtet. Wird nach dem Einführen des Gewindeteils 15 und des Schaftteils 20 in die Gegenbohrung der Bolzen 4 durch den Betätigungshebel 16 aus der in Fig. 1a ersichtlichen Stellung in die aus Fig. 1b ersichtliche Stellung um etwa 90° gedreht, bewegt sich aufgrund der Exzentrizitäten eine Seite des schneidenden Gewindes 15 aus der Hüllfläche des zapfenartigen Fortsatzes 20, wie dies aus den Fig. 1b und 1c ersichtlich ist. Aus der Stellung gemäß Fig. 1b läßt sich der Betätigungshebel 16 herausziehen, so daß der zapfenartige Fortsatz 19 die Vertiefung 12 in dem Fortsatz 11 verläßt und der Betätigungshebel 16 und die Zapfen 10 in die aus Fig. 1c ersichtliche Stellung verschwenkt werden kann, in der er die Aussparung 21 im wesentlichen vollständig abdeckt und mit seiner Oberfläche bündig zu der ebenen Außenfläche des Gehäuses 1 liegt.

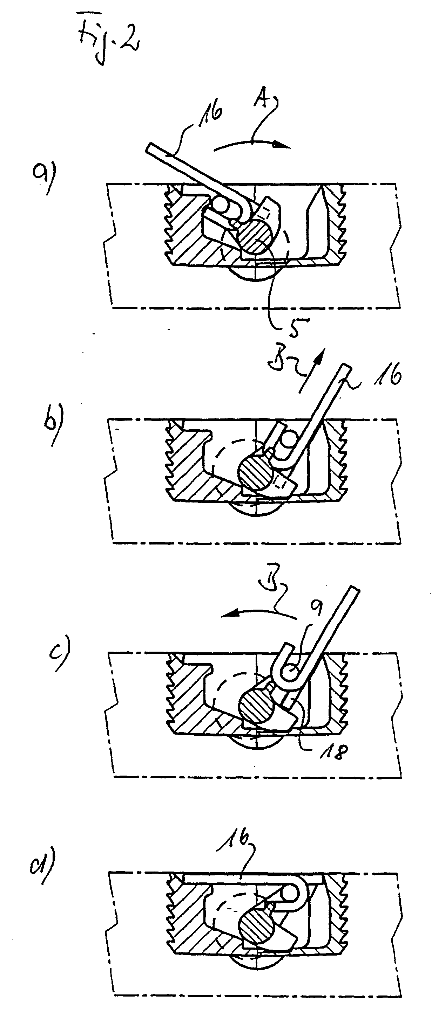

Die Gewindegänge 6, 8 weisen eine gegensinnige Steigung zu dem Gewindegang 15 auf, so daß nach dem Zusammenfügen der zu verbindenden Teile diese zusammengezogen werden und ein etwa zwischen beiden vorhandener Spalt verschwindet. Aus Fig. 2 ist ersichtlich, wie durch Schwenken des Betätigungshebels 16 in Richtung des Pfeils A in die aus Fig. 2b ersichtliche Stellung um etwa 90° die Verriegelungsdrehung erfolgt. Nach der Verriegelung wird der Betätigungshebel in Richtung des Pfeils B herausgezogen, so daß der Fortsatz 18 die Ausnehmung 12 verläßt und der Betätigungshebel 16 in Richtung des Pfeils B um die Zapfen 9 in seine aus den Fig. 1c und 2d ersichtliche Verschlußstellung verschwenkt werden kann.

## Patentansprüche

1. Verbindungsbeschlag zum lösbaren Verbinden zweier Teile, vorzugsweise zweier Möbelteile, bestehend
aus einem in eine Aussparung des ersten Teils einsetzbaren topfförmigen Gehäuse (1), in dem ein Bolzen (4) mit einem das erste Teil (24) überragenden Zapfen (14, 15) drehbar gelagert ist, der in eine Bohrung des anderen Teils einführbar und in dieser durch Drehung verriegelbar ist,
aus einem mit dem Bolzen (4) verbundenen radialen Betätigungshebel (16), der einen Durchbruch (21) des Gehäuses durchsetzt, **dadurch gekennzeichnet,**
**daß** der Betätigungshebel (16) radial verschieblich an dem Bolzen (4) gehalten und in der eingeschobenen Stellung mit diesem drehfest gekuppelt und in einer ausgezogenen Stellung relativ zu diesem schwenkbar ist.

2. Verbindungsbeschlag nach Anspruch 1, **dadurch gekennzeichnet, daß** der Betätigungshebel (16) in der eingeschobenen Stellung mit einem Fortsatz (18)in eine radiale oder seitliche Öffnung oder Vertiefung (12) des Bolzens (4) greift.

3. Verbindungsbeschlag nach Anspruch 1 oder 2, **dadurch gekennzeichnet, daß** der Bolzen (4) mit einem radialen Lagerbock (9) mit seitlichen, zu dem Bolzen (4) parallelen Zapfen versehen ist, auf die gabelartig U-förmig gekrümmte Schenkel (17) einer Seite des Betätigungshebels (16) einhakbar sind, und daß der Betätigungshebel (16) mit einem die Schenkel überragenden Fortsatz (18) in die Vertiefung (12) greift.

4. Verbindungsbeschlag nach einem der Ansprüche 1 bis 3, **dadurch gekennzeichnet, daß** der Betätigungshebel (16) aus einem im wesentlichen rechtekkigen Blechzuschnitt besteht, von dessen einer schmalen Seite diese seitlich überragende Schenkel derart U-förmig zurückgebogen sind, daß diese von einem zwischen diesen befindlichen Steg (19) im gebogenen Zustand (17) überragt werden.

5. Verbindungsbeschlag nach einem der Ansprüche 1 bis 4, **dadurch gekennzeichnet, daß** der Gehäusedurchbruch (21) der Form des Betätigungshebels (16) entspricht und der Betätigungshebel (16) im ausgezogenen Zustand in der Weise um die Zapfen (10) des Lagerbocks (9) schwenkbar ist, daß er den Durchbruch (21) abdeckt.

6. Verbindungsbeschlag nach einem der Ansprüche 1 bis 5, **dadurch gekennzeichnet, daß** der Betätigungshebel (16) in den Durchbruch (21) derart eindrückbar ist, daß seine Außenseite mit der ebenen Außenseite des Gehäuses (1) fluchtet.

7. Verbindungsbeschlag nach einem der Ansprüche 1 bis 6, **dadurch gekennzeichnet, daß** der Bolzen (4) mit einem radialen Vorsprung (13) versehen ist, der einen Anschlag für ein gehäusefestes Widerlager (28) bildet und die Drehung des Bolzens (4) begrenzt.

## Claims

1. A connecting fitting for releasably connecting two parts, preferably two furniture parts, comprising
a pot-shaped housing (1) to be inserted in a recess of the first part, in which housing a bolt (4) with a pin (14, 15) protruding beyond the first part (24) is rotatably mounted, which pin can be introduced into a bore of the other part and can be locked in the same by being rotated,
a radial actuating lever (16) connected with the bolt (4), which actuating lever extends through an aperture (21) of the housing, **characterized in**
**that** the actuating lever (16) is radially movably held at the bolt (4) and in the retracted position is non-rotatably coupled with the same and in an extended position can be swivelled relative to the same.

2. The connecting fitting as claimed in claim 1, **characterized in that** in the retracted position an extension (18) of the actuating lever (16) engages in a radial or lateral opening or depression (12) of the bolt (4).

3. The connecting fitting as claimed in claim 1 or 2, **characterized in that** the bolt (4) is provided with a radial bearing block (9) with lateral pins parallel to the bolt (4), onto which pins fork-like U-shaped curved legs (17) of one side of the actuating lever (16) can be hooked, and that with an extension (18) protruding beyond the legs the actuating lever (16) engages in the depression (12).

4. The connecting fitting as claimed in any of claims 1 to 3, **characterized in that** the actuating lever (16) consists of a substantially rectangular sheet metal blank, from the one narrow side of which legs laterally protruding beyond the same are bent back in a U-shaped manner such that a web (19) disposed between the same protrudes beyond the same in the bent condition (17).

5. The connecting fitting as claimed in any of claims 1 to 4, **characterized in that** the housing aperture (21) corresponds to the shape of the actuating lever (16), and in the extended condition the actuating lever (16) can be swivelled about the pin (10) of the bearing block (9) such that it covers the aperture (21).

6. The connecting fitting as claimed in any of claims 1 to 5, **characterized in that** the actuating lever (16) can be pressed into the aperture (21) such that its outer surface is flush with the flat outer surface of the housing (1).

7. The connecting fitting as claimed in any of claims 1 to 6, **characterized in that** the bolt (4) is provided with a radial projection (13) which forms a stop for an abutment (28) firmly mounted at the housing and limits the rotation of the bolt (4).

## Revendications

1. Ferrure d'assemblage pour la jonction détachable de deux pièces, de préférence de deux parties de meuble, constituée par
un boîtier (1) en forme de pot susceptible d'être mis en place dans une échancrure de la première partie, dans lequel est monté mobile en rotation un goujon (4) comportant un pion (14, 15) dépassant au-delà de la première partie (24) et susceptible d'être introduit dans un perçage de l'autre partie et d'être verrouillé par rotation dans celui-ci,
un levier d'actionnement radial (16) relié au goujon (4) et traversant une traversée (21) du boîtier,
**caractérisée en ce que**
le levier d'actionnement (16) est maintenu mobile en translation radiale sur le goujon (4) et accouplé solidairement en rotation avec celui-ci dans la position rétractée et mobile en pivotement par rapport à celui-ci dans une position déployée.

2. Ferrure d'assemblage selon la revendication 1, **caractérisée en ce que** dans la position rétractée le levier d'actionnement (16) s'engage par un prolongement (18) dans un orifice ou renfoncement radial ou latéral (12) du goujon (4).

3. Ferrure d'assemblage selon l'une ou l'autre des revendications 1 et 2, **caractérisée en ce que** le goujon (4) est pourvu d'un bloc support radial (9) comportant des pions latéraux parallèles au goujon (4), sur lesquels peuvent venir s'accrocher des bras (17) recourbés à la manière d'une fourchette et en forme de U d'un côté du levier d'actionnement (16), et **en ce que** le levier d'actionnement (16) s'engage dans le renfoncement (12) par un prolongement (18) dépassant au-delà des bras.

4. Ferrure d'assemblage selon l'une des revendications 1 à 3, **caractérisée en ce que** le levier d'actionnement (16) est constitué par un flan de tôle sensiblement rectangulaire à partir de l'un des côtés étroits duquel ces bras dépassant latéralement sont repliés en forme de U de telle sorte que ceux-ci sont dépassés par une barrette (19) située entre ceux-ci dans l'état recourbé (17).

5. Ferrure d'assemblage selon l'une des revendications 1 à 4, **caractérisée en ce que** la traversée (21) du boîtier correspond à la forme du levier d'actionnement (16), et dans l'état déployé le levier d'actionnement (16) est mobile en pivotement autour des pions (10) du bloc support (9) de manière à recouvrir la traversée (21).

6. Ferrure d'assemblage selon l'une des revendications 1 à 5, **caractérisée en ce que** le levier d'actionnement (16) est susceptible d'être enfoncé dans la traversée (21) de telle sorte que son côté extérieur est en alignement avec le côté extérieur plan du boîtier (1).

7. Ferrure d'assemblage selon l'une des revendications 1 à 6, **caractérisée en ce que** le goujon (4) est pourvu d'une saillie radiale (13) qui forme une butée pour une contre-butée (28) solidaire du boîtier et qui limite la rotation du goujon (4).
